# EUROPEAN PATENT APPLICATION

(11) **EP 3 910 369 A1**
(43) Date of publication of application: **17.11.2021**
(21) Application number: 20174295.4
(22) Date of filing: 13.05.2020
(51) Int. Cl.: G01S 7/35, G06F 3/01

(54) **RADAR DETECTION SENSOR, SYSTEM AND METHOD**

(71) Applicant: Stichting IMEC Nederland, 5656 AE Eindhoven (NL)
(72) Inventor: Corradi, Federico, 3001 Leuven (BE); Sifalakis, Emmanouil, 3001 Leuven (BE)
(74) Representative: Körfer, Thomas

(57) **Abstract**

A detection sensor (1) comprises a signal transmitter (10), configured to successively generate and transmit a detection signal (4), in a plurality of observation intervals, and a signal receiver (11), configured to receive a scatter signal (5). It comprises a plurality of frequency bins, resulting from a scattering of the detection signal (4), in the plurality of observation intervals. Moreover, the detection sensor (1) comprises an event generator (12), configured to compare a present scatter signal to a previous scatter signal, separately for each of the plurality of frequency bins, and generate an event for each frequency bin, in which the present scatter signal differs from the previous scatter signal by at least an event threshold amount.

## Description

The present invention relates to a detection sensor, a detection system, and a detection method using active sensing, especially using radar signals.

In active sensing, especially in active radar sensing, a detection signal is transmitted towards an object, scattered, and received as a scatter signal. From the received scatter signal, information regarding the object, which scattered the detection signal can be derived. Since in typical applications, frequency sweeps, also called chirps, are transmitted within the detection signal repeatedly, the received scatter signal comprises a great amount of data. Recording, storing, transferring and processing this data poses great challenges.

For example, the document US 2018/0329049 A1 shows a radar-based active sensing system, where the problem of a large data volume is tackled by increasing the time interval between transmitting chirps within the detection signal. This significantly increases the time interval between receiving scattered chirps within the scattered signal and thereby significantly reduces the amount of data to process. This approach though is also disadvantageous, since important information might be missed between the chirps.

An object of the present invention therefore is to provide a detection sensor, detection system and method, which allow for reducing the system complexity while at the same time not losing valuable data.

The object is solved by the features of the independent claims. Additional features of the invention are provided in the dependent claims. In the following, parts of the description and drawings referring to embodiments which are not covered by the claims are not presented as embodiments of the invention, but as examples useful for understanding the invention.

An inventive detection sensor comprises a signal transmitter, configured to successively generate and transmit a detection signal, in a plurality of observation intervals, and a signal receiver, configured to receive a scatter signal, comprising a plurality of frequency bins, resulting from a scattering of the detection signal, in the plurality of observation intervals. Moreover, the detection sensor comprises an event generator, configured to compare a present scatter signal to a previous scatter signal, separately for each of the plurality of frequency bins, and generate an event for each frequency bin, in which the present scatter signal differs from the previous scatter signal by at least an event threshold amount. This allows for significantly reducing the amount of data to record, store, transfer and process.

Preferably, the event generator is configured to compare the present scatter signal to at least two consecutive previous scatter signals, and to generate an event for each frequency bin, in which the present scatter signal differs from the at least two consecutive previous scatter signals by at least the event threshold amount. This significantly reduces the susceptibility to noise.

Preferably, the event threshold amount is different for at least two frequency bins. Additionally or alternatively, the event threshold amount is preset or user adjustable or automatically dynamically adjustable. Additionally or alternatively, the detection sensor comprises an event threshold determiner, configured to determine the event threshold amount based upon an occurrence of past events, and/or a type of detection object, and/or a detection situation, and/or a noise level. This allows a high flexibility regarding the use of the detection sensor.

Advantageously and preferably, the present scatter signal is the scatter signal of a present observation interval. The previous scatter signal then is the scatter signal of the observation interval directly previous to the present observation interval. This allows for efficiently processing the signals.

Preferably, the event generator is configured to compare the present scatter signal to the previous scatter signal, with regard to absolute signal values in the time domain and/or to compare the present scatter signal to the previous scatter signal with regard to phase differences with regard to the detection signal. This allows for a significant increase in accuracy.

Advantageously and preferably, the detection sensor moreover comprises an event transmission interface, connectable to an external event processor. The event generator is configured to transmit the events determined by the event generator through the event transmission interface. This allows for a separate location of the detection sensor and the external event processor, significantly reducing the space necessary for mounting the detection sensor.

Moreover and preferably, the signal receiver comprises a single antenna configured to receive the scatter signal, or the signal receiver comprises at least two antennas configured to receive the scatter signal. Additionally, the signal transmitter comprises a single antenna configured to transmit the detection signal, or the signal transmitter comprises at least two antennas configured to transmit the detection signal. This allows for either a simple system construction using a low antenna number or a high detection accuracy, when using a high antenna number.

An inventive detection system comprises a previously described detection sensor and an event processor. This allows for a complete detection within the system.

Preferably, the detection sensor is arranged in a first housing, while the event processor is arranged in a second housing. This allows for a separate location and therefore for a significant reduction in mounting space of the sensor. For example, the detection system could be mounted within a vehicle. The first housing, comprising the detection sensor, might be mounted in the front bumper, while the event processor comprised by the second housing might be mounted beneath the dashboard.

Preferably, the first housing and the second housing are connected through a cable connection or a wireless connection. The cable connection therein can be an electrical cable or a fiber optic cable. Preferably, this connection is a digital connection. This allows for an especially efficient transmission of the events.

Advantageously and preferably, the first housing does not comprise any further event processing hardware. This further reduces the required mounting space for the first housing.

Advantageously and preferably, the event processor comprises an event post-processor configured to perform post-processing on the events provided by the event generator. The post-processing comprises a statistical evaluation in the time domain and/or the frequency domain. Additionally or alternatively, the post-processing comprises a one-dimensional filtering regarding the frequency bins, and/or a one-dimensional filtering regarding the observation intervals, and/or a two-dimensional filtering regarding the frequency bins and regarding the observation intervals, and/or a plausibility check. This further increases the accuracy of the detection.

Advantageously and preferably, the event processor comprises a motion analyzer, configured to perform a motion analysis on the events provided by the event generator, or data generated therefrom. This allows for a complete situation analysis.

Preferably, the event processor comprises an event interpreter, configured to interpret the events provided by the event generator, or data generated therefrom. This allows for a high-level analysis of the situation.

Advantageously and preferably, the event interpreter is configured to determine a type of detected object and/or a type of movement by a detected object and/or a presence of a person and/or a specific person and/or a type of gesture performed by a person and/or a type of activity performed by a person and/or a type of motion in the spatial domain and/or in the time domain. This allows for a very flexible interpretation.

An inventive method for performing a detection comprises successively generating and transmitting a detection signal, in a plurality of observation intervals, receiving a scatter signal, comprising a plurality of frequency bins, resulting from a scattering of the detection signal, in the plurality of observation intervals, comparing a present scatter signal to a previous scatter signal, separately for each of the plurality of frequency bins, and generating an event for each frequency bin, in which the present scatter signal differs from the previous scatter signal by at least an event threshold amount. This allows for a significant reduction in system complexity.

Exemplary embodiments of the invention are now further explained by way of example only with regard to the drawings, in which
- FIG. 1: shows an embodiment of the inventive detection sensor in a block diagram;
- FIG. 2: shows a detail of the embodiment of the inventive detection sensor;
- FIG. 3: shows exemplary signals in the embodiment of the inventive detection sensor;
- FIG. 4: shows exemplary signals and events in the embodiment of the inventive detection sensor, and
- FIG. 5: shows an embodiment of the inventive method in a flow diagram.

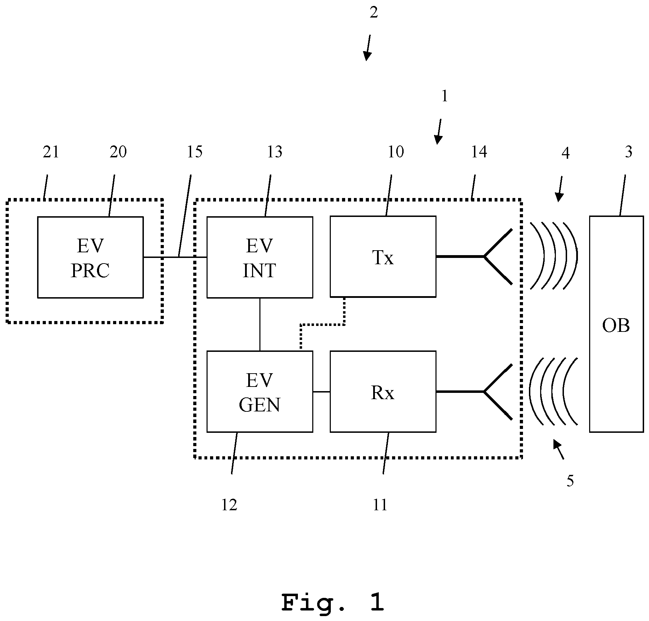

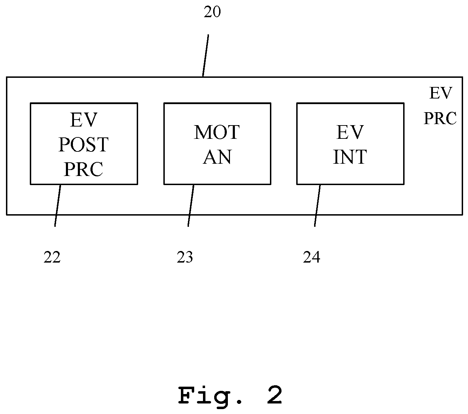

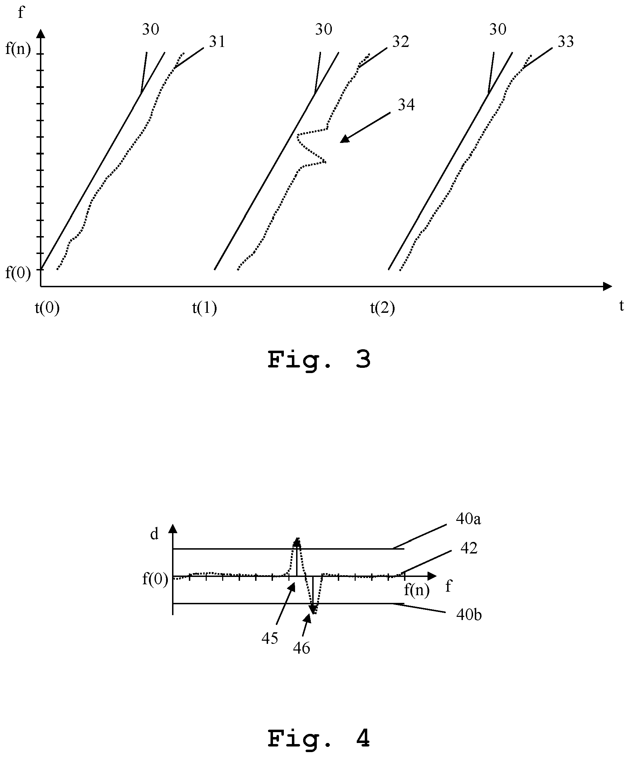

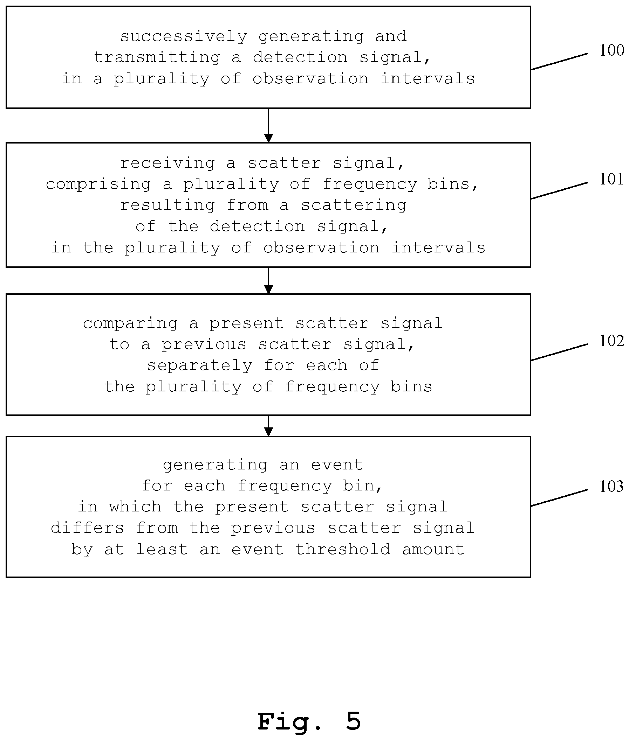

First, we demonstrate the general construction and function of an embodiment of the inventive detection sensor along FIG. 1. With regard to FIG. 2, further construction details and function details are described with regard to the embodiment. With regard to FIG. 3 and FIG. 4, details of the function are described with regard to a number of different signals. Finally, along FIG. 5, the function of an embodiment of the inventive method is described in detail. Similar entities and reference numbers in different figures have been partially omitted.

In FIG. 1, a detection system 2 comprising a detection sensor 1 and an event processor 20 is shown. The detection sensor 1 is arranged in a first housing 14, while the event processor 20 is arranged in a second housing 21. The detection sensor 1 comprises a signal transmitter 10, which is configured to generate and transmit a detection signal 4 towards an object to be detected 3. The detection sensor 1 moreover comprises a signal receiver 11, configured to receive a scatter signal 5, which corresponds to the detection signal 4, scattered by the object 3.

The signal transmitter 10 can comprise one or more transmission antennas for transmitting the detection signal 4. The signal receiver 11 also can comprise one or more reception antennas for receiving the scatter signal 5. The detection sensor 1 moreover comprises an event generator 12, which is connected to the signal receiver 11. Optionally, the event generator 12 is additionally connected to the signal transmitter 10.

Moreover, the detection sensor 1 comprises an event interface 13, which is connectable to an external event processor. In the embodiment shown here, the event interface 13 is connected to the event processor 20 through a connection 15, which is depicted here as a cable connection, for example an electrical cable or a fiber optic cable. Alternatively, the connection 15 can also be a wireless connection. Although not depicted here, a controller, for controlling the function of the signal transmitter 10, signal receiver 11, event generator 12 and event interface 13 might additionally be comprised by the detection sensor 1.

In operation, the signal transmitter 10 successively generates and transmits the detection signal 4 in a plurality of observation intervals. The scatter signal 5 is received by the signal receiver in the plurality of observation intervals. The detection signal 4 therein comprises energy components in a plurality of frequency bins. The scatter signal therefore also comprises energy components in a plurality of frequency bins. The signal receiver 11 is configured to receive the scatter signal in a manner that allows a later differentiation of the energy components in the different frequency bins.

The received scatter signal is then handed on to the event generator 12, which compares a present scatter signal to a previous scatter signal, separately for each of the plurality of frequency bins. This comparison can be performed on absolute signal values or on phase values with regard to the detection signal 4. For this purpose, the optional connection to the signal transmitter 10 provides information regarding the detection signal or directly the detection signal, to the event generator 12. The event generator 12 then generates an event for each frequency bin, in which the present scatter signal differs from the previous scatter signal by at least an event threshold amount. Instead of only comparing the present scatter signal to the directly previous scatter signal, also a comparison of the present scatter signal to a number of previous scatter signals is possible. In this case, an event is only generated for each frequency bin, in which the present scatter signal differs from at least two consecutive previous scatter signals by at least the event threshold amount. Also, an increase of this number to 3, 4, 5 or more consecutive previous scatter signals is possible. The previous scatter signals can be the directly previous scatter signals, but they can be further in the past as well. This significantly reduces the susceptibility to noise.

In a most simple implementation, the event threshold amount is fixed and identical for all frequency bins. Alternatively, though, the event threshold amount can be different for different frequency bins. This allows for setting a different sensitivity for different frequency areas. Further advantageously, the event threshold amount is user adjustable. This allows for a very flexible use of the detection sensor. Advantageously, the event threshold amount is automatically dynamically adjustable. This allows for an automatic reaction to different situations.

Further advantageously, the detection sensor comprises an event threshold determiner, which is configured to determine the event threshold amount based upon an occurrence of past events and/or a type of detection object and/or a detection situation, and/or a noise level, and/or statistics of the detection signal, and/or statistics of the scatter signal. This allows for an optimal detection independent of circumstance.

The events generated by the event generator 12 are then handed on to the event interface 13, which transmits the events through the connection 15 to the event processor 20. The event processor 20 performs further processing on the events, especially, objects and motion are detected based upon the events. The detailed functionality and inner workings of the event processor 20 are described in FIG. 2.

In FIG. 2, a detailed view of the event processor 20 of a further embodiment of the inventive detection system is shown. The event processor 20 comprises an event post-processor 22, a motion analyzer 23, and an event interpreter 24.

It should be noted that especially the motion analyzer 23 and the event interpreter 24 are merely optional components.

The event post-processor performs post-processing on the events provided by the event generator. Especially, this post-processing may comprise a statistical evaluation in the time domain and/or the frequency domain, and/or a one-dimensional filtering regarding the frequency bins, and/or a one-dimensional filtering regarding the observation intervals, and/or a two-dimensional filtering regarding the frequency bins and regarding the observation intervals, and/or a plausibility check.

The motion analyzer 23 performs a motion analysis on the events provided by the event generator, or data generated therefrom. This can for example include data provided by the event post-processor. The motion analysis, for example analyses the movement of detected objects, or the movement of surroundings. The event interpreter interprets the events further. Especially, this interpretation can comprise a type of detected object, and/or a type of movement by a detected object, and/or a presence of a person, and/or a specific person, and/or a type of gesture performed by a person, and/or a type of activity performed by a person, and/or a type of motion in the spatial domain or in the time domain.

It should be noted that the operation of the event post-processor 22, and if implemented, the motion analyzer 23 and the event interpreter 24 is of a statistical nature and data-driven. They can be implemented through model training.
In FIG. 3, a number of exemplary signals in a further embodiment of the inventive detection sensor is shown. Here, reference number 30 indicates the detection signal in a number of consecutive observation intervals. The begin of the respective observation interval is denoted by t(0), t(1) and t(2). Reference number 31 indicates the received scatter signal 31 in the first time interval, reference number 32 indicates the received scatter signal in the second time interval and reference number 33 indicates the received scatter signal in the third time interval.

On the x-axis, time is shown, while on the y-axis, the frequency, especially the individual frequency bins f(0) - f(n) are shown. The scatter signals 31, 33 shown here largely follow the shape of the detection signal 30, and include only minor variations due to for example noise. The scatter signal 32 though comprises an area 34 with a major disturbance with regard to the transmission signal, but also with regard to the scatter signal 31, which is the previous scatter signal.

In this diagram, only the timing of the reception of the scatter signals 31-33 is shown, but not the respective amplitude. Since as described earlier, the comparison of the present scatter signal to the previous scatter signal can be performed either with regard to absolute value or with regard to phase, the timing abnormality shown in area 34, here, would register as a significant phase shift.

In FIG. 4, further signals in a further embodiment of the inventive detection sensor are shown. On the x-axis, the frequency, especially the individual frequency bins f(0) - f(n) are depicted. On the x-axis, a difference d of the previous scatter signal and the present scatter signal is shown.

Here, reference number 42 indicates a difference of between the previous scatter signal and the present scatter signal. For example, it can be a difference between the amplitude of the previous scatter signal and the present scatter signal. Alternatively, it can be a difference between the phase difference of the previous scatter signal to the detection signal and a phase difference of the present scatter signal to the detection signal. Reference number 40a shows an upper event threshold, while reference number 40b shows a lower event threshold. The upper event threshold 40a is an event threshold amount away from 0, while the lower event threshold 40b also is the event threshold amount away from 0.

While the difference of the previous scatter signal and the present scatter signal 42 is between the upper event threshold 40a and the lower event threshold 40b, and therefore, differs from 0 by less than the event threshold amount, the event generator does not generate events. The event generator though generates events 45, 46, when the difference between the previous scatter signal and the present scatter signal 42 surpasses the upper event threshold 40a or the lower event threshold 40b, and therefore is larger than the event threshold amount.

The event generator generates a positive event 45, if the difference of the previous scatter signal and the present scatter signal 42 is larger than the upper event threshold 40a, and generates a negative event 46, in case the difference of the previous scatter signal and the present scatter signal 42 is lower than the lower event threshold 40b.

The comparison is performed frequency bin, by frequency bin. This means, that the previous scatter signal within a first frequency bin is compared to the present scatter signal in the same first frequency bin. A comparison of signals between different frequency bins is not performed. Therefore, only in the frequency bins, in which the event threshold amount is exceeded by the difference of the previous scatter signal and the present scatter signal, events 45, 46 are generated.

The events generated by the event generator do not have to be differentiated in positive and negative events. Also, the generation of a single type of event no matter of the sign of the difference of the previous scatter signal and the present scatter signal is possible.

Moreover, the events 45, 46 generated by the event generator do not necessarily comprise a strength of the event. In the most simple implementation, only the fact that the event threshold amount was exceeded by the difference of the previous scatter signal and the present scatter signal is recorded in the event. Alternatively, each event can also record the amount of difference of the previous scatter signal and the present scatter signal.

Finally, in FIG. 5, an embodiment of the inventive detection method is shown in a flow diagram. In a first step 100, a detection signal is successively generated and transmitted in a plurality of observation intervals.

In a second step 101, a scatter signal, comprising a plurality of frequency bins, resulting from a scattering of the detection signal is received in the plurality of observation intervals.

In a third step 102, a present scatter signal is compared to a previous scatter signal, separately for each of the plurality of frequency bins.

In a final fourth step 103, an event is generated for each frequency bin, in which the present scatter signal differs from the previous scatter signal by at least an event threshold amount.

The invention is not limited to the examples and especially not to a specific number of previous scatter signals to be compared to the present scatter signal. Also, the present invention is not limited to radar sensing. Alternative active sensing technologies might be employed. For example, ultrasound sensing, terahertz sensing, or LIDAR sensing can be used. The characteristics of the exemplary embodiments can also be used in any advantageous combination. Especially, the details disclosed with regard to the device and system can also be employed with regard to the method. Every feature described in the description and/or claimed in the claims and/or shown in the drawings can be combined within this invention.

## Claims

1. Detection sensor (1), comprising:
- a signal transmitter (10), configured to successively generate and transmit a detection signal (4), in a plurality of observation intervals,
- a signal receiver (11), configured to receive a scatter signal (5), comprising a plurality of frequency bins, resulting from a scattering of the detection signal (4), in the plurality of observation intervals,
- an event generator (12), configured
o to compare a present scatter signal to a previous scatter signal, separately for each of the plurality of frequency bins, and
o generate an event for each frequency bin, in which the present scatter signal differs from the previous scatter signal by at least an event threshold amount.

2. Detection sensor (1) according to claim 1,
wherein the event generator (12) is configured
- to compare the present scatter signal to at least two consecutive previous scatter signals, and
- to generate an event for each frequency bin, in which the present scatter signal differs from the at least two consecutive previous scatter signals by at least the event threshold amount.

3. Detection sensor (1) according to claim 1 or 2, wherein the event threshold amount is different for at least two frequency bins, and/or
wherein the event threshold amount is preset or user-adjustable or automatically dynamically adjustable, and/or wherein the detection sensor (1) comprises an event threshold determiner, configured to determine the event threshold amount based upon
- an occurrence of past events, and/or
- a type of detection object, and/or
- a detection situation, and/or
- a noise level.

4. Detection sensor (1) according to any of the claims 1 to 3,
wherein the present scatter signal is the scatter signal (5) of a present observation interval, and
wherein the previous scatter signal is the scatter signal (5) of the observation interval directly previous to the present observation interval.

5. Detection sensor (1) according to any of the claims 1 to 4,
wherein the event generator (12) is configured
- to compare the present scatter signal to the previous scatter signal, with regard to absolute signal values in the time domain, and/or
- to compare the present scatter signal to the previous scatter signal, with regard to phase differences with regard to the detection signal.

6. Detection sensor (1) according to any of the claims 1 to 5,
comprising an event interface (13), connectable to an external event processor (20), and
wherein the event generator (12) is configured to transmit the events determined by the event generator through the event interface (13).

7. Detection sensor (1) according to any of the claims 1 to 6,
wherein the signal receiver (11) comprises a single antenna configured to receive the scatter signal, or wherein the signal receiver (11) comprises at least two antennas configured to receive the scatter signal, and wherein the a signal transmitter (10) comprises a single antenna configured to transmit the detection signal, or wherein the a signal transmitter (10) comprises a at least two antennas configured to transmit the detection signal.

8. Detection system (2), comprising a detection sensor (1) according to any of the claims 1 to 7 and an event processor (20).

9. Detection system according to claim 8,
wherein the detection sensor (1) is arranged in a first housing (14),
wherein the event processor (20) is arranged in a second housing (21), and
wherein the first housing (14) and the second housing (21) are preferably connected through a cable connection (15) or a wireless connection.

10. Detection system according to claim 8 or 9,
wherein the first housing (14) does not comprise any further event processing hardware.

11. Detection system according to any of the claims 7 to 10,
wherein the event processor (20) comprises an event post-processor (22), configured to perform post-processing on the events provided by the event generator (12), and wherein the post-processing comprises
- a statistical evaluation in the time domain and/or frequency domain, and/or
- a one-dimensional filtering regarding the frequency bins, and/or
- a one-dimensional filtering regarding the observation intervals, and/or
- a two-dimensional filtering regarding the frequency bins and regarding the observation intervals, and/or
- a plausibility check.

12. Detection system (2) according to any of the claims 7 to 11,
wherein the event processor (20) comprises a motion analyzer (23), configured to perform a motion analysis on the events provided by the event generator (12), or data generated therefrom.

13. Detection system (2) according to any of the claims 7 to 12,
wherein the event processor (20) comprises an event interpreter (24), configured to interpret the events provided by the event generator (12), or data generated therefrom.

14. Detection system (2) according to claim 13,
wherein the event interpreter (24) is configured to determine
- a type of detected object, and/or
- a type of movement by a detected object, and/or
- a presence of a person, and/or
- a specific person, and/or
- a type of gesture performed by a person, and/or
- a type of activity performed by a person, and/or
- a type of motion in the spatial domain and/or in the time domain.

15. Method for performing a detection, comprising:
- successively generating and transmitting (100) a detection signal, in a plurality of observation intervals,
- receiving (101) a scatter signal, comprising a plurality of frequency bins, resulting from a scattering of the detection signal, in the plurality of observation intervals,
- comparing (102) a present scatter signal to a previous scatter signal, separately for each of the plurality of frequency bins, and
- generating (13) an event for each frequency bin, in which the present scatter signal differs from the previous scatter signal by at least an event threshold amount.
